# EUROPÄISCHE PATENTANMELDUNG

(11) **EP 1 890 168 A1**
(43) Veröffentlichungstag der Anmeldung: **20.02.2008**
(21) Anmeldenummer: 06119147.4
(22) Anmeldetag: 18.08.2006
(51) Int. Cl.: G01S 17/42, G01S 17/89, G01C 1/02

(54) **Laserscanner**

(71) Anmelder: Leica Geosystems AG, 9435 Heerbrugg (CH)
(72) Erfinder: Jensen, Thomas, 9400 Rorschach (CH); Siercks, Knut, 9015 St. Gallen (CH)
(74) Vertreter: Büchel, Kaminski & Partner

(57) **Zusammenfassung**

Ein Laserscanner zum Erfassung einer räumlichen Umgebung umfasst einen Stator (21), einen am Stator (21) um eine erste Drehachse drehbar gelagerten Rotor (1) und einen am Rotor (1) um eine zweite Drehachse drehbar gelagerten Drehkörper (2). Im Rotor (1) sind eine Laserquelle (6) und ein Detektor (7) angeordnet. Zwischen dem Rotor (1) und Drehkörper (2) ist auf der zweiten Drehachse beidseits des Drehkörpers (2) je ein optischer Link (9) ausgebildet, so dass über den ersten optischen Link (9) Sendelicht von der Laserquelle in den Drehkörper (2) einzubringen und über den zweiten optischen Link (9) Empfangslicht aus dem Drehkörper (2) auszubringen ist. Ein erster Drehantrieb (25) treibt den Rotor (21) und ein zweiter Drehantrieb (26) den Drehkörper (2) an. Zwei Winkelmesser (4) und eine Auswertungselektronik (5), die mit der Laserquelle (6) und dem Detektor (7) verbunden ist, ermöglichen es, eine erfasste Distanz einer entsprechenden Ausrichtung zuzuordnen. Der Drehkörper (2) kann klein gebaut werden, ist komplett passiv und bedarf somit keiner elektrischen Versorgungs- oder Signalübertragung.

## Beschreibung

Die Erfindung bezieht sich auf einen Laserscanner nach dem Oberbegriff des Anspruches 1.

Zur Erfassung einer räumlichen Umgebung werden typischerweise sogenannte 3D-Laserscanner eingesetzt. Diese werden an einem Ort aufgestellt und tasten das 3D Szenario von diesem Ort aus ab. Der Messablauf erfordert hierbei Drehungen um zwei orthogonale Achsen, nämlich um eine Lotachse und eine um die Lotachse drehende horizontale Achse. Die Drehung um die Lotachse erfolgt durch die Bewegung des Rotors um den Stator, wobei sich die zweite Drehachse im Rotor befindet.

Bei Ausführungsformen gemäss der EP 1 562 055 ist die gesamte Sende- und Empfangsoptik fest angeordnet. Senkrecht über der Sende- und Empfangsoptik ist ein Ablenkungsspiegel angeordnet, der um eine horizontale Achse drehbar am Rotor gelagert ist. Das Laserlicht wird über die Sendeoptik auf den Ablenkungsspiegel geführt. Die Einsatzmöglichkeiten dieser Ausführungsformen sind aufgrund des begrenzten Erfassungsbereichs stark eingeschränkt. Kritisch bei dieser Aufbauform ist zudem die relativ große Ausdehnung und die Variabilität des optischen Strahlengangs über die Verstellung des Spiegels, was eine effiziente Unterdrückung von Streulicht vom kollimierten Sendestrahl stark erschwert. Da bei der Vermessung beliebiger 3D-Szenarios praktisch nur nicht-kooperative Flächen mit relativ schlechter Reflektivität und starker Streuung (kleiner Albedo) auf recht grossen Distanzen vermessen werden, ist der negative Einfluss von Streulicht nicht zu unterschätzen und gelangt schnell in die Größenordnung des zu messenden Signals.

Einen weiteren Nachteil stellt die Offenheit des optischen Aufbaus dar, da der Spiegel innerhalb des optischen Aufbaus frei beweglich sein muss. Die Abdeckung des Systems gegenüber Staub und andere Umwelteinflüsse ist daher einerseits erforderlich, generiert aber anderseits wieder das beschriebene Streulicht-Problem beim Strahlaustritt.

Die Schrift DE 295 18 708 U1 beschreibt einen Theodoliten mit einem Fernrohr, das um eine vertikale Achse drehbar und um eine horizontale Achse schwenkbar ist. Der Theodolit umfasst zudem eine Laser-Entfernungsmessvorrichtung, wobei der Laserstrahl für die Entfernungsmessung in den Strahlengang des Fernrohres des Theodoliten eingebracht wird. Dazu ist die Laserquelle in der Kippachse des Theodolits mit dem Fernrohr fest verbunden und der Laserstrahl wird über mindestens ein Umlenkelement in die Zielachse des Strahlenganges des Fernrohrs eingespiegelt. Zur Bestimmung der Distanzwerte ist am Fernrohr eine Auswertungselektronik angeordnet.

Die Auswertungselektronik führt zu einer Erhöhung der Baugrösse des Fernrohres, wobei bereits das Fernrohr für einen 3D-Laserscanner zu viel Platz benötigt und zusätzliche Masse bedeutet. Ein weiterer Nachteil der Auswertungselektronik am Fernrohr besteht darin, dass die Auswertungselektronik über elektrische Versorgungs- und über Signalleitungen durch die Schwenkachse des Fernrohres verbunden werden muss. Wenn das Fernrohr um die horizontale Achse frei drehbar sein soll, so muss die elektrische Speisung der Laserquelle über eine Drehdurchführung erfolgen. Die bekannten elektrischen Drehdurchführungen sind aufwendig und im rauen Einsatz des Gerätes störungsanfällig.

Eine Aufgabe der vorliegenden Erfindung besteht darin einen verbesserten 3D-Laserscanner bereitzustellen.

Eine weitere Aufgabe besteht in der Bereitstellung eines 3D-Laserscanners mit erhöhter Feldtauglichkeit, insbesondere grösserer Robustheit und geringerem Stromverbrauch.

Diese Aufgaben werden durch die Merkmale des Anspruches 1 oder der abhängigen Ansprüche gelöst bzw. weitergebildet.

Die erfinderische Lösung basiert auf der Auslegung des Laserscanners mit einem möglichst einfach und klein aufgebauten, um zwei orthogonale Achsen beweglichen optischen Drehkörpers, der abgeschlossen und ohne elektrische Drehdurchführungen ausgebildet werden kann. Die Laserquelle, der Laser-Detektor und die Auswertungselektronik werden ausserhalb des optischen Drehkörpers in einem Rotor untergebracht, der um die im wesentlichen vertikale Achse dreht.

Von der Laserquelle im Rotor muss lediglich ein Lasersignal in den optischen Drehkörper eingebracht werden. Vom optischen Drehkörper wiederum muss lediglich das empfangene Laserlicht in den Rotor übertragen werden. Diese beiden Lasersignale können auf je einer Seite des optischen Drehkörpers zentral entlang der Drehachse des Drehkörpers übertragen werden. Das Sende- und Empfangslicht wird über sogenannte optische Verbindungen bzw. Links in den drehbaren optischen Messkopf ein- bzw. aus diesem ausgekoppelt. Der Messkopf ist dadurch komplett passiv und bedarf keiner elektrischen Versorgungs- oder Signalübertragung.

Für eine gute Distanzmessvorrichtung wird ein Sendelaserstrahl mit im wesentlichen rotationssymmetrischer Strahlqualität und hoher Leistung benötigt. Laserquellen, welche diesen Anforderungen genügen, sind aufwendig und teuer. Günstige Dioden-Breitstreifenemitter können mit einer Mikrooptik effizient an rotationssymmetrische Lichtleiter gekoppelt werden, so dass der Linienfokus des Emitters zu einem etwa quadratischen Fokus umgeformt wird.

Das von der Laserquelle stammende Laserlicht wird im Rotor durch einen Lichtleiter von der Laserquelle zum optischen Link zwischen Rotor und Drehkörper geführt. Dazu bietet sich eine Multimodefaser von beispielsweise 50 µm Kerndurchmesser und einer numerischen Apertur von beispielsweise 0.12 an. In eine solche Faser lässt sich ein kostengünstiger und leistungsstarker Dioden-Breitstreifenlaser über eine einfache Übertragungsoptik effizient einkoppeln.

In der einfachsten Form besteht der optische Link aus zwei Faserferrulen (Fasersteckern) mit einem Luftspalt von wenigen Mikrometern, bei dem die eine Ferrule fest im Drehkörper montiert ist und sich mitdreht und die andere im Rotor direkt in der Drehachse gehaltert ist. Gegebenenfalls ist lediglich auf einer Seite des optischen Links ein Lichtleiter angeordnet. Beim Einbringen des Sendelichts in den Drehkörper kann das eintretende Licht im Drehkörper gegebenenfalls direkt auf ein Umlenkelement gelangen, so dass auf einen innen an den optischen Link anschliessenden Lichtleiter verzichtet werden kann. Beim Austragen des Empfangslichts aus dem Drehkörper kann das austretende Licht im Rotor gegebenenfalls direkt auf den Detektor gelangen, so dass auf einen aussen an den optischen Link anschliessenden Lichtleiter verzichtet werden kann.

Die Verwendung von Lichtwellenleitern im optischen Link ist beispielsweise vorteilhaft, wenn diese derart ausgelegt sind, dass eine Variation des Einfallswinkels des Lichts in den Lichtwellenleiter auf der Seite des Drehkopfs einen vernachlässigbaren Einfluss auf die Lage der Strahlachse an dessen Faserende hat. Mit einer derartigen optischen Auslegung kann erreicht werden, dass eine Exzentrizität der zugehörigen mechanischen Rotationsachse sich nicht an diesem Punkt auf die Lage der optischen Achse auswirken.

Wird der optische Link im Empfangskanal entsprechend realisiert, so bleibt die Lage der optischen Achsen von Sende- zu Empfangsstrahl im Drehkopf unbeeinflusst von einer Exzentrizität der entsprechenden Rotationsachse. Somit muss diese Unsicherheit bei der Dimensionierung des Öffnungswinkels der Empfangsoptik nicht berücksichtigt werden und kann schliesslich kleiner ausgelegt werden. Damit kann das empfangene Hintergrundlicht minimiert werden, was schliesslich zu einer Erhöhung der Empfindlichkeit und Genauigkeit des Distanzmessers führt.

In einer bevorzugten Ausführungsform wird eine Beschichtung der Ferrulenflächen eingesetzt, um die Kopplungseffizienz zu erhöhen und mögliche störende Etaloneffekte zu unterdrücken. Ist ein größerer Luftspalt erforderlich, zum Beispiel wegen der Toleranzen in der Drehbewegung, so kann der optische Link auch über zwei kleine Kollimationsoptiken aufgebaut werden, die ebenfalls eine sehr gute Kopplungseffizienz erlauben.

Nach Passage einer kurzen Faserstrecke im Messkopf wird das Sendelicht beispielsweise über zwei Spiegel und eine einfache Kollimationsoptik zentral aus dem Messkopf geführt. Die Empfangsoptik umfasst insbesondere auch eine Optik sowie zwei Spiegel und ist auf die gleiche Achse ausgerichtet. Wegen der benötigten grösseren Empfangsapertur verwendet die Empfangsoptik insbesondere den äußeren Bereich der Optik.

Mit diesem Aufbau ist es möglich den Drehkörper kompakt und klein zu bauen, so dass beispielsweise Drehkörper mit einem Durchmesser in Richtung der Drehkörper Drehachse von lediglich 5cm und senkrecht zur Optik mit einer Höhe von lediglich 4cm realisierbar sind. Das von der Laserquelle stammende Laserlicht gelangt über die Spiegel und den zentralen Bereich der Optik auf einen Objektbereich. Das zurück gestreute Laserlicht gelangt durch den radial äusseren Bereich der Optik und zwei Spiegel in einen Lichtleiter, der zum optischen Austrittslink zwischen Drehkörper und Rotor führt.

Die Empfangselektronik kann gegebenenfalls direkt beim Austrittslink angeordnet sein. Vorzugsweise aber führt ein Lichtleiter vom Austrittslink zur Auswertungselektronik. Wenn der Detektor und die Laserquelle an der gemeinsamen Auswertungselektronik im Rotor angeschlossen sind, so kann die Distanzmessung effizient durchgeführt werden.

Die Zeichnungen erläutern die Erfindung anhand von Ausführungsbeispielen schematisch. Dabei zeigt
- Fig. 1: einen schematischen Vertikalschnitt durch den Rotor und den darin gelagerten Drehkörper;
- Fig. 2: zwei schematische Längsschnitte durch einen Dioden-Breitstreifenemitter, eine Mikrooptik und einen rotationssymmetrische Lichtleiter;
- Fig. 3: einen schematischen Vertikalschnitt durch den Drehkörper;
- Fig. 4: einen schematischen Vertikalschnitt durch eine Ausführungsform gemäss Fig. 1 mit einem Stator;
- Fig. 5: einen schematischen Vertikalschnitt einer Ausführungsform mit einer Kamera und
- Fig. 6: einen schematischen Vertikalschnitt einer Ausführungsform mit einem gepumpten Festkörper-Laser.

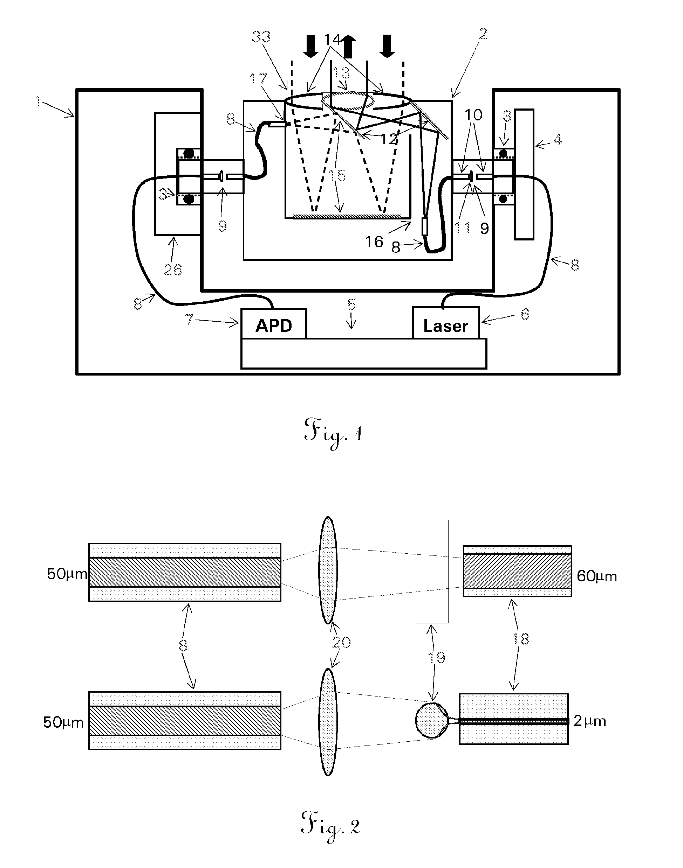

Fig. 1 zeigt einen Rotor 1, an dem ein Drehkörper 2 um eine horizontale Achse an den Drehlagern 3 drehbar gelagert ist. Durch einen hier nicht dargestellten ersten Drehantrieb ist der Rotor 1 um eine Stehachse bewegbar, wobei die Drehlage durch einen ersten Winkelmesser bestimmbar ist. Mit einem zweiten Drehantrieb 26 wird der Drehkörper 2 in Drehung versetzt. Die Drehlage des Drehkörpers 2 wird von einem zweiten Winkelmesser 4 erfasst. Eine Auswertungselektronik 5 im Rotor 1 ist mit einer Laserquelle 6 (Laser) und einem Laserlicht-Detektor 7 (APD) der Distanzmessvorrichtung verbunden.

Das von der Laserquelle 6 stammende Laserlicht wird im Rotor 1 durch einen Lichtleiter 8 von der Laserquelle 6 zu einem optischen Link 9 zwischen Rotor 1 und Drehkörper 2 geführt. Dazu bietet sich eine Multimodefaser von beispielsweise 50 µm Kerndurchmesser und einer numerischen Apertur von beispielsweise 0,12 an.

Der optische Link 9 umfasst zwei Faserferrulen 10 (Fasersteckern) und einen Luftspalt von wenigen Mikrometern, wobei die eine Ferrule fest im Drehkörper 2 montiert ist und sich mitdreht und die andere im Rotor 1 direkt in der Drehachse gehaltert ist. In der dargestellten Ausführungsform umfasst der optische Link 9 zur optimalen Übertragung des Laserlichts zudem noch eine Linse 11.

Im Drehkörper 2 führt ein Lichtleiter 8 das Sendelicht zu einer Austrittsstelle 16, von der es über zwei erste Spiegel 12 und eine zentrale Linse 13 aus dem Drehkörper 2 austritt. Die beiden ersten Spiegel 12 sind im Drehkörper 2 bei einer Durchtrittsberandung 33 angeordnet. Das Sendelicht wird zwischen den beiden ersten Spiegeln 12 von einem seitlichen Bereich zur zentralen Linse 13 geleitet.

Das vom Objektbereich zurück gestreute Laserlicht gelangt durch eine Ringlinse 14 und zwei zweite Spiegel 15 zu einer Eintrittsstelle 17 eines Lichtleiters 8. Über einen optischen Link 9 und den anschliessenden Lichtleiter 8 gelangt das Empfangslicht zum Detektor 7. Die Auswertungselektronik ermittelt aus Signalen der Laserquelle 6 und des Detektors 7 Distanzwerte, die der entsprechenden Drehausrichtung des zweiten Winkelmessers 4 zugeordnet werden. Die Ausrichtung des Rotors 1 relativ zu einem Stator wird von einem nicht dargestellten ersten Winkelmesser erfasst. Jeder erfasste Distanzwert kann einer durch zwei Ausrichtungswerte bestimmten räumlichen Ausrichtung zugeordnet werden.

In der dargestellten Ausführungsform des Drehkörpers sind unterschiedliche Brennweiten für die Sende- und Empfangsoptik vorgesehen. Die Sendeoptik mit einer Brennweite von 50 mm bedarf einer Austrittspupille von 12 mm Durchmesser. Die Optik kann ein Mehrlinser sein oder aus einer (asphärischen) Einzellinse bestehen. Die Empfangsoptik ist mit einer Brennweite von 80 mm und einem Durchmesser von 30 mm deutlich größer ausgelegt und nimmt im Zentralbereich die Sendeoptik auf. Hierfür ist eine Durchbohrung der Empfangslinse mit der Sendeoptik als Einschub geeignet, oder eine komplexe Glaspressung mit zwei unterschiedlichen Brennweitenbereichen, oder die Kombination der Empfangsoptik mit einem diffraktiven Element im Zentralbereich, um hier eine höhere Brechkraft zu erzielen.

Realisierbar ist auch eine Auslegung der Optik wie in Fig. 3 dargestellt, bei der die gleiche Frontlinse 13a für Empfangs- und Sendeoptik genutzt wird, in Verbindung mit einem weiteren Linsenelement 13b im Sendekanal, was die gewünschte verkürzte Brennweite ergibt.

Da die Eigenschaften der Optik stark abhängig sind von der Sendeleistung, den Kerndurchmessern der Fasern, der noch zu messenden maximalen Distanz, der Albedo des Targets, der Empfindlichkeit des Detektors und dem Messprinzip im allgemeinen, sind andere Ausführungsformen der Optik durch den Fachmann ableitbar.

Das empfangene Licht wird über einen gefalteten Strahlengang, bestehend aus zwei zweiten Spiegeln 15, auf einen Lichtleiter 8 mit einem Kerndurchmesser von 200 µm abgebildet. Die zweiten Spiegel 15 können auch gekrümmt sein, um den Aufbau weiter zu verkleinern. Das Empfangslicht wird über einen optischen Link 9, der ähnlich ausgebildet ist wie beim Sendekanal, im Rotor 1 auf einen Detektor 7 geleitet. Sämtliche Elektronikkomponenten können somit außerhalb des Drehkörpers 2 gehalten werden.

Innerhalb des Drehkörpers 2 gibt es keinen Überlapp der Strahlengänge für Sende- und Empfangskanal was das Risiko für Streulicht deutlich reduziert. Der gesamte optische Aufbau befindet sich gekapselt im Drehkörper 2 und ist damit gegenüber Umwelteinflüssen optimal geschützt. Eine äußere Abdeckung ist nicht erforderlich. Unabhängig vom Drehwinkel bleibt die Sende und Empfangsoptik immer gleich zueinander ausgerichtet im Gegensatz zu bisherigen Ausführungsformen, bei denen der Spiegel relativ zum Rest der Optik permanent bewegt wird, was zu ständig sich ändernden Abbildungssituationen führt und relativ justage- bzw. fehleranfällig ist.

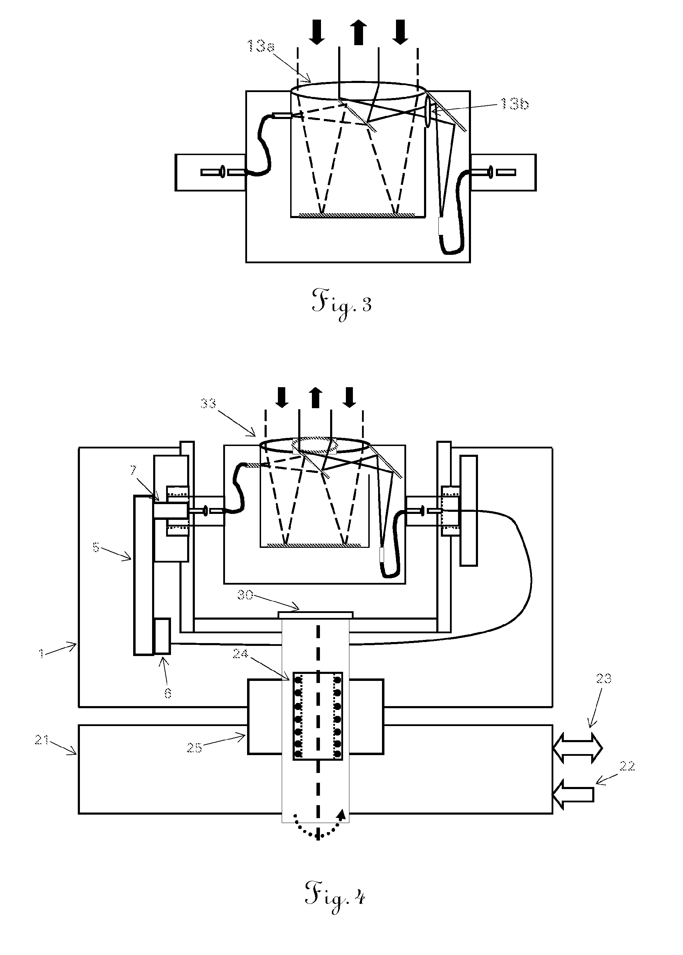

Fig. 2 zeigt eine Laserquelle 6 in der Form eines Dioden-Breitstreifenemitters 18 mit Ausdehnungen von 60 µm breit (slow axis) und 2 µm schmal (fast axis). Das Laserlicht dieses Emitters wird mit einer Mikrooptik in den rotationssymmetrischen Lichtleiter 8 mit einem Durchmesser von 50 µm eingekoppelt. Die Mikrooptik des Ausführungsbeispiels umfasst eine zylindrische Linse 19 und eine sphärische Linse 20, wobei der Linienfokus des Emitters 18 zu einem etwa quadratischen Fokus umgeformt wird. Aus dem Stande der Technik, beispielsweise aus A. von Pfeil "Beam shaping of broad area diode laser: principles and benefits", Proc. SPIE Vol. 4648 Test and Measurement Applications of Optoelectronic Devices, sind segmentierende Strahlumformungsoptiken bekannt. Diese neuen Optiken können einen Linienfokus abschnittweise zu einem quadratischen Fokus aufstapeln.

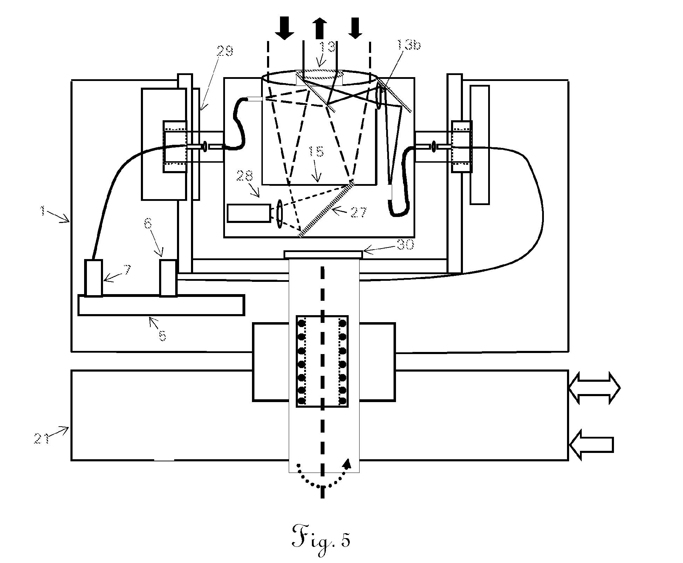

Weitere Ausführungsformen finden sich in den Abbildungen 4 und 5. In diesen ist nun auch das Gesamtsystem mit der Lagerung des Rotors 1 auf einem Stator 21 zu erkennen sowie eine elektrische Versorgung 22 und eine Kommunikationsschnittstelle 23. Zur Drehlagerung des Rotors 1 am Stator 21 ist ein Lager 24 vorgesehen. Der Rotor 1 wird von einem ersten Drehantrieb 25 in Drehung versetzt.

Ein erfindungsgemässer Laserscanner umfasst somit den Stator 21, den am Stator 21 um eine erste Drehachse drehbar gelagerten Rotor 1, den am Rotor 1 um eine zweite Drehachse drehbar gelagerten Drehkörper 2, die Auswertungselektronik 5, die Laserquelle 6 und den Laserlicht-Detektor 7. Für den Durchtritt von Sendelicht und Empfangslicht umfasst der Drehkörper 2 eine zur zweiten Drehachse parallele Durchtrittsberandung 33.

Eine gewünschte Scanbewegung erfolgt durch eine entsprechende Steuerung des ersten Drehantriebs 25 und des zweiten Drehantriebs 26. Die räumliche Ausrichtung des Drehkörpers 2 wird über die beiden Winkelmesser 4 erfasst. Durch die Verbindung der Auswertungselektronik 5 mit der Laserquelle 6, dem Detektor 7 und den Winkelmessern 4 kann eine erfasste Distanz einer entsprechenden Ausrichtung zugeordnet werden.

In der Ausführungsform gemäss Fig. 4 ist der Detektor 7 direkt beim optischen Link 9 angeordnet. Dadurch kann auf einen Lichtleiter für die Übertragung des Empfangslichts vom optischen Link 9 zum Detektor verzichtet werden.

In der Ausführungsform gemäss Fig. 5 ist der rückwärtige zweite Spiegel 15 der Empfangsoptik teildurchlässig. Hinter diesem teildurchlässigen zweiten Spiegel 15 lassen sich im Drehkörper 2 ein Umlenkspiegel 27 und eine kompakte CCD-Kamera 28 installieren. Die Kamera 28 ermöglicht eine optische Überprüfung des Empfangskanals. Um die Kamera 28 im Drehkörper 2 betreiben zu können, wird eine Drehdurchführung 29 für die Kamera 28 verwendet. Die Stromversorgung der Kamera 28 kann jedoch ebenfalls auch optisch erfolgen, indem in die Faser zw. Laserquelle 6 und den Link 9 über einen chromatischen Beamsplitter Licht einer anderen Wellenlänge von einer separaten Quelle (100 mW) eingekoppelt wird und im Drehkopf über einen gleichen Beamsplitter wieder ausgekoppelt und auf eine photovoltaische Komponente oder Solarzelle geleitet wird, welche die nötige Versorgung der Kamera übernimmt. Die Datenübertragung kann optisch über ein moduliertes Signal auch wieder über einen Beamsplitter via Ausgangsfaser erfolgen. Entsprechende Schwachstromkomponenten sind z.B. aus der Mobilfunktechnik bekannt und erhältlich. Mit Hilfe der Kamera kann die Textur des zu scannenden Objektes erfasst werden. Als Alternative oder in Ergänzung der Kamera kann auch ein einfacher spektraler Sensor verwendet werden. Soll die gesamte zu scannende Szenerie vorab schnell erfasst werden, so ist auch eine in dem Rotor (1) seitlich neben dem Rotorkörper (2) angeordnete Kamera mit einer entsprechenden Zoomoptik realisierbar.

Unterhalb des Drehkörpers 2 kann auf dem Rotor 1 eine Referenzeinheit 30 ähnlich der Ausführung in DE 102 16 405 angebaut werden, um eine vollständige Kalibrierung des Distanzmessvorrichtung zu erlauben. Die Referenzeinheit 30 besteht im einfachsten Fall aus einem Target im bekannten Abstand, um ein Distanznormal bei Rotation des Messkopfes zu erhalten. Zusätzlich kann die Reflektivität des Targets variieren, um eine dynamische Distanzkalibrierung zu ermöglichen.

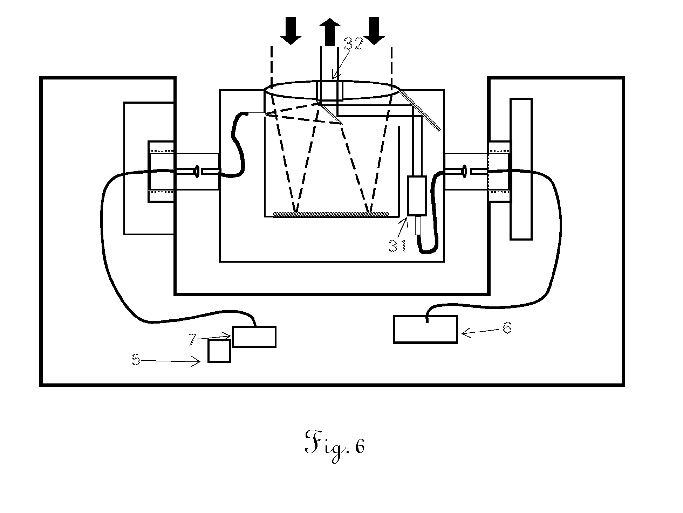

In der Ausführungsform gemäss Fig. 6 wird eine Variante mit einem dioden-gepumpten Festkörperlaser 31 gezeigt. Beim Festkörperlaser 31 handelt es sich z.B. um einen mit einem sättigbaren Absorber (Cr⁴⁺:YAG) gütegeschalteten µ-chip Laser (Nd:YAG). Wegen der hohen Spitzenleistungen im kW-Bereich ist eine Faserübertragung aufgrund der Zerstörschwelle kritisch. In der gezeigten Ausführung kann das Pumplicht vom Pumplaser 6 (808 nm) über den optischen Link 9 in den Drehkörper 2 geführt werden und dort den Festkörperlaser 31 anregen. Das austretende Laserlicht muss nicht durch eine Linse geführt werden sondern kann durch ein Austrittsloch 32 aus dem Drehkörper 2 austreten.

Es versteht sich von selbst, dass alle beschriebenen Merkmale vom Fachmann in Kombination verwendet werden können, um weitere Ausführungsbeispiele im Rahmen der vorliegenden Erfindung abzuleiten. Insbesondere die Grössenangaben beziehen sich auf mögliche Realisierungsformen und sind daher nicht limitierend zu verstehen.

Wenn bei einer speziellen Ausführungsform auf einen kompakten Aufbau des Drehkörpers 2 verzichtet werden kann, so kann anstelle des beschriebenen gefalteten Strahlenganges ein beliebiger anderer Strahlengang, beispielsweise mit Sendestrahlengang und Empfangsstrahlengang seitlich nebeneinander vorgesehen werden.

## Patentansprüche

1. Laserscanner mit
- einem Stator (21),
- einem am Stator (21) um eine erste Drehachse drehbar gelagerten Rotor (1),
- einem am Rotor (1) um eine zweite Drehachse drehbar gelagerten Drehkörper (2) mit einer zur zweiten Drehachse parallelen Durchtrittsberandung (33) für den Durchtritt von Sendelicht und Empfangslicht,
- einer Auswertungselektronik (5),
- einer Laserquelle (6) und
- einem Laserlicht-Detektor (7),
wobei
- ein erster Drehantrieb (25) den Rotor (21) und ein zweiter Drehantrieb (26) den Drehkörper (2) antreibbar macht,
- die räumliche Ausrichtung des Drehkörpers (2) über zwei Winkelmesser (4) erfassbar ist und
- die Auswertungselektronik (5) mit der Laserquelle (6) dem Detektor (7) sowie den Winkelmessern (4) verbunden ist, um eine erfasste Distanz einer entsprechenden Ausrichtung zuzuordnen,
**dadurch gekennzeichnet, dass**
die Laserquelle (6) sowie der Detektor (7) im Rotor (1) angeordnet sind und zwischen Rotor (1) und Drehkörper (2) auf der zweiten Drehachse beidseits des Drehkörpers (2) je ein optischer Link (9) ausgebildet ist, wobei über den ersten optischen Link (9) Sendelicht in den Drehkörper (2) einkoppelbar und über den zweiten optischen Link (9) Empfangslicht aus dem Drehkörper (2) auskoppelbar ist.

2. Laserscanner nach Anspruch 1,
**dadurch gekennzeichnet, dass**
die Laserquelle (6) über einen Lichtleiter (8) mit dem ersten optischen Link (9) verbunden ist.

3. Laserscanner nach Anspruch 2,
**dadurch gekennzeichnet, dass**
der erste optische Link (9) so ausgebildet ist, dass eine Veränderung eines Einfallswinkels an einem Eingang des ersten optischen Links (9) keine Veränderung eines Ausfallswinkels an einem Ausgang des ersten optischen Links (9) bewirkt.

4. Laserscanner nach Anspruch 1, 2 oder 3,
**dadurch gekennzeichnet, dass**
im Drehkörper (2) an beide optische Links (9) je ein Lichtleiter (8) anschliesst, wobei die Lichtleiter (8) Sendelicht vom ersten optischen Link (9) zu einer Austrittsstelle (16) und Empfangslicht von einer Eintrittsstelle (17) zum zweiten optischen Link (9) führen.

5. Laserscanner nach einem der Ansprüche 1 bis 4,
**dadurch gekennzeichnet, dass**
zur Führung des Sendelichts zwei erste Spiegel (12) und ein zentraler Durchtrittsbereich (13, 32) in der Durchtrittsberandung (33) eingesetzt sind, wobei die beiden ersten Spiegel im Drehkörper (2) bei der Durchtrittsberandung (33) angeordnet sind und das Sendelicht zwischen den beiden ersten Spiegeln (12) von einem seitlichen Bereich zum zentralen Durchtrittsbereich (13, 32) geleitet wird.

6. Laserscanner nach einem der Ansprüche 1 bis 5,
**dadurch gekennzeichnet, dass**
der zentrale Durchtrittsbereich (13, 32) von einer zentralen Linse (13) gegebenenfalls aber von einem Austrittsloch 32 gebildet wird.

7. Laserscanner nach einem der Ansprüche 1 bis 6,
**dadurch gekennzeichnet, dass**
zur Führung des Empfangslichts zwei zweite Spiegel (15) und ein ringförmiger Linsenbereich (14) ausgebildet sind, wobei sich der ringförmige Linsenbereich (14) um den zentralen Durchtrittsbereich (13, 32) erstreckt, ein zweiter Spiegel (15) gegenüber der Durchtrittsberandung (33) und einer bei der Rückseite eines ersten Spiegels (12) im zentralen Bereich liegt.

8. Laserscanner nach einem der Ansprüche 1 bis 7,
**dadurch gekennzeichnet, dass**
die Brennweiten der Sende- und Empfangsoptik unterschiedlich sind, wobei die Sendeoptik vorzugsweise eine Brennweite von im Wesentlichen 50 mm und eine Austrittspupille von im Wesentlichen 12 mm Durchmesser aufweist und die Empfangsoptik insbesondere eine Brennweite von im Wesentlichen 80 mm und einem Durchmesser von im Wesentlichen 30 mm aufweist.

9. Laserscanner nach einem der Ansprüche 1 bis 8,
**dadurch gekennzeichnet, dass**
als Laserquelle ein Dioden-Breitstreifenemitter eingesetzt und mit einer Mikrooptik an den Lichtleiter (8) gekoppelt wird, wobei der Linienfokus des Emitters von der Mikrooptik zu einem etwa quadratischen Fokus umgeformt wird.

10. Laserscanner nach Anspruch 9,
**dadurch gekennzeichnet, dass**
das Licht des Breitstreifenemitters im Drehkörper (2) einem pumpbaren Festkörperlaser (31), insbesondere einem sättigbaren Absorber (Cr⁴⁺:YAG) oder einem gütegeschalteten µ-chip Laser (Nd:YAG), zuführbar und
das Laserlicht des Festkörperlasers (31) als Sendelicht einzusetzen ist.

11. Laserscanner nach einem der Ansprüche 1 bis 10,
**dadurch gekennzeichnet, dass**
am Rotor (1) eine Referenzfläche (3) ausgebildet ist, deren Lage bei drehendem Rotorkörper (2) als Referenz periodisch erfassbar ist.

12. Laserscanner nach einem der Ansprüche 1 bis 11,
**dadurch gekennzeichnet, dass**
im Drehkörper (2) eine Kamera (28) aufweist, insbesondere der rückwärtige zweite Spiegel (15) der Empfangsoptik teildurchlässig ist und dahinter im Drehkörper (2) ein Umlenkspiegel (27) und eine kompakte CCD-Kamera (28) eingesetzt ist.

13. Laserscanner nach Anspruch 12,
**dadurch gekennzeichnet, dass**
eine Stromversorgung der Kamera (28) als optische Verbindung mit nachgeordneter photovoltaischer Komponente ausgebildet ist, insbesondere mit einer Ein- und Auskopplung von Licht einer weiteren Laserquelle über chromatische Strahlteiler.
